# EUROPÄISCHE PATENTANMELDUNG

(11) **EP 1 669 843 A1**
(43) Veröffentlichungstag der Anmeldung: **14.06.2006**
(21) Anmeldenummer: 04029468.8
(22) Anmeldetag: 13.12.2004
(51) Int. Cl.: G06F 3/033

(54) **Menüeinträge in Drop-Down Menüs grafischer Bedienoberflächen**

(71) Anmelder: SIEMENS AKTIENGESELLSCHAFT, 80333 München (DE)
(72) Erfinder: Windl, Helmut, 93077 Peisig (DE)

(57) **Zusammenfassung**

Die Erfindung betrifft ein Verfahren zur Eingabe und Anzeige von Informationen, Daten und/oder Eingabeelementen in Drop-Down Menüs grafischer Bedienoberflächen wobei das Drop-Down Menüs (5, 9) eine Menge von Menüeinträgen (6a-6k, 11a-11g) beliebiger Art aufweist, wobei die Menge von Menüeinträgen wenigstens eine Anzahl von in beliebiger Kombination an- und abwählbaren Menüeinträgen in Form einer Check-Box-Liste (6e, 6f, 6h-6j, 11a-11g)und/oder sich gegenseitig ausschließenden und damit lediglich umschaltbaren Menüeinträgen in Form einer Radio-Button-Liste (6a-6d) umfasst, wobei der Menüeintrag in Form einer Check-Box-Liste und der Menüeintrag in Form einer Radio-Button-Liste jeweils seine eigene, signifikante, den Charakter des Menüeintrags beschreibende Zustandskennung im Drop-Down Menü (5, 9) aufweist.

## Beschreibung

Die Erfindung betrifft ein Verfahren zur Eingabe und Anzeige von Informationen, Daten und/oder Eingabeelementen in Drop-Down Menüs grafischer Bedienoberflächen.

Zur Interaktion und als Kommunikationsschnittstelle zwischen Anwender und Computer werden grafische Bedienoberflächen eingesetzt. Sie stellen ein virtuelles Bedien- und Anzeigefeld dar, welches aus einzelnen Bedien- und Anzeigeobjekten besteht und über die der Anwender Befehle oder Informationen an den Computer weitergibt, wobei der Computer wiederum den Erhalt dieser Befehle und Informationen bzw. die Reaktion darauf zurückmeldet. Im Bestreben die Bedienung auch komplexerer Prozesse möglichst intuitiv zu gestalten und damit eine zügige Navigation durch das Programm zu ermöglichen, haben sich bestimmte Vereinheitlichungen durchgesetzt. Diese Vereinheitlichungen liegen im Wesentlichen in der Nutzung gleicher oder ähnlicher Bedien- und Anzeigeobjekte, wie beispielsweise Textboxen, Drop-Down Menüs, Auswahllisten, Buttons, Icons usw.

Nahezu alle Softwareprogramme, in denen es einen höheren Grad der Interaktion zwischen Anwender und Computer bedarf und die aus diesem Grunde eine umfangreichere grafische Bedienoberfläche brauchen, weisen Drop-Down Menüs auf.

Drop-Down Menüs sind Dialogfenster, die sich durch Anwahl eines Menüpunktes, unmittelbar unterhalb des angewählten Menüpunktes öffnen. Menüpunkte sind sensitive Felder auf der Menüleiste, die sich am oberen Rand des Programmfensters befinden und i.d.R. aus einem Textstring bestehen, wobei die unmittelbare Umgebung des Textstrings als sensitives Feld ausgeprägt ist. Die An- und Auswahl des Menüpunktes kann über verschiedene Anwahlmittel erfolgen, bewährt haben sich die Computermaus, Trackballs, Toch Screens oder definierte oder definierbare Tastenkombinationen. Die Drop-Down Menüs beinhalten i.d.R. eine Anzahl von mit dem Menüpunkt themenverwandten Menüeinträgen, die wiederum, in Form einer einspaltigen Tabelle im Dialogfester des Drop-Down Menüs angeordnet sind, einzeln angewählt werden und somit verschiedene Aktionen auslösen können. Die Menüeinträge werden durch einen Texteintrag beschrieben, in einigen Fällen werden diesen Texteinträgen Symbole / Icons vorgeordnet. In Abhängigkeit der auszulösenden Aktionen unterscheidet man verschiedene Arten von Menüeinträgen. So können Menüeinträge beispielsweise direkt Aktionen auslösen, unterlagerte Menüebenen öffnen oder der Abgrenzung und Gruppierung anderer Menübefehle dienen. Ferner können Menüeinträge als so genannte Checked-Menu-Items dazu dienen, verschiedene Modi ein- bzw. auszuschalten. Obwohl Checked-Menu-Items im Vergleich zu anderen Menüeinträgen andere Aufgaben haben und anders genutzt werden sind sie in Drop-Down Menüs von anderen Menüeinträgen nicht zu unterscheiden. Sie unterliegen jedoch hinsichtlich des An- und Auswahlverhaltens nahezu den gleichen Mechanismen wie andere Menüeinträge auch. So werden im angewählten Zustand die Checked Menü Items vielfach durch ein Ankreuzfeld gekennzeichnet, während sie im nicht angewählten Zustand, wie bei anderen Menüeinträgen auch, keine Kennung aufweisen. Dies stellt einen erheblichen Nachteil dar, da ein inaktiver Checked Menu Item im Drop-Down Menü sich nicht von anderen Menüeinträgen unterscheidet und somit vom Anwender nicht als solcher erkennbar ist. In anderen Fällen werden Checked-Menu-Items, genau wie andere Menüeinträge auch, durch Texteinträgen vorangestellte, den jeweiligen Menüeintrag beschreibende, Symbole gekennzeichnet. Im Falle des aktivierten Menüeintrages erhalten diese Symbole einen zusätzlichen Rahmen, im abgewählten Zustand werden die Symbole ohne zusätzlichen Rahmen dargestellt.

Auch diese Kennzeichnung löst das Problem der Unterscheidbarkeit von Checked Menü Items und anderen Menüeinträgen nicht.

Im Gegenteil, bei komplexeren Programmen und einer Vielzahl von Symbolen sind die vorangestellten Symbole oft nicht mehr selbsterklärend und der Widererkennungswert dieser speziellen Symbole ist stark eingeschränkt.

Wie bereits erwähnt werden über Checked Menü Items verschiedene Modi aktiviert bzw. inaktiv geschaltet. Befinden sich in einem Drop-Down Menü mehrere Menüeinträge vom Typ Checked Menü Item, so können diese entweder unabhängig voneinander an- bzw. abgewählt werden und haben damit die Funktion so genannter Check-Boxes, oder sie schließen sich gegenseitig aus, d.h. nur einer dieser Menüeinträge kann zur Zeit aktiv sein und haben damit die Funktion so genannter Radio-Button. In der Praxis hat es sich als äußerst nachteilig erwiesen, nicht zweifelsfrei Kenntnis darüber zu haben, ob eine Check-Box und damit eine zusätzliche Option angewählt worden ist, oder ein Radio-Button bedient wird, der mit seiner Anwahl einen anderen gesetzten Modi aufgibt.

Zu den Mechanismen von Drop-Down Menüs gehört das Verhalten nach Anwahl eines Menüeintrages. Mit Ausnahme des Aufrufs eines weiterführenden Drop-Down Menüs schließt sich das Drop-Down Menü unmittelbar nach Anwahl des Menüeintrages. Dies ist im Zusammenhang mit Checked-Menu-Items sehr nachteilig, da der Anwender nicht mehr erkennen kann, ob die gewünschte Einstellung nun erfolgreich war oder nicht. Um dies zweifelsfrei festzustellen, ist ein zeitraubendes, erneutes Öffnen des Drop-Down Menüs notwendig. Nachteilig wird das sofortige selbsttätige Schließen des Drop-Down Menüs insbesondere dann, wenn der Anwender beispielsweise mehrere Check-Box Einträge durchzuführen hat, da jedes Mal von Beginn an durch das Drop-Down Menü navigiert werden muss, um eine Einstellung zu verändern.

Aufgabe der vorliegenden Erfindung ist es daher, eine Vorrichtung und ein Verfahren anzugeben, welches auf einfache Weise ein aufwandsarmes, effektives Arbeiten mit Checked Menü Items in Drop-Down Menüs ermöglicht.

Die Aufgabe wird gelöst durch eine Vorrichtung zur Einstellung und Anzeige von Information, Daten und/oder Eingabeelementen auf einer grafischen Bedienoberfläche, insbesondere auf einem Bildschirm, mit mindestens einer Menüleiste bestehend aus einer Anzahl von Menüpunkten, wobei mindestens ein Drop-Down Menü zu einem Menüpunkt zugeordnet ist und eine Menge von Menüeinträgen aufweist, wobei die Menüeinträge in mindestens einem Drop-Down Menü derart ausgebildet sind, dass a) wenigstens eine Anzahl dieser Menüeinträge in beliebiger Kombination an- und abwählbare Menüeinträge so genannte Check-Box Listen und/oder b) wenigstens eine Anzahl dieser Menüeinträge mindestens sich gegenseitig ausschließende und damit lediglich umschaltbare Menüeinträge so genannte Radio-Button Listen sind und dadurch gekennzeichnet ist, dass die Vorrichtung Mittel zur Interaktion aufweist, durch die der Menüeintrag gemäß a) und b) seine eigene, signifikante, den Charakter des Menüeintrags beschreibende Zustandsänderung und -kennzeichnung im Drop-Down Menü erhält.

Die Aufgabe wird weiterhin gelöst durch ein Verfahren zur Einstellung und Anzeige von Information, Daten und/oder Eingabeelementen über Drop-Down Menüs grafischer Bedienoberflächen, wobei das Drop-Down Menü eine Menge von Menüeinträgen beliebiger Art aufweist, wobei die Menge von Menüeinträgen wenigstens eine Anzahl von in beliebiger Kombination an- und abwählbaren Menüeinträgen so genannte Check-Box Listen und/oder sich gegenseitig ausschließenden und damit lediglich umschaltbaren Menüeinträgen so genannte Radio-Button-Listen umfasst und dadurch gekennzeichnet ist, dass der Menüeintrag Check-Box Listen und der Menüeintrag Radio-Button-Listen jeweils seine eigene, signifikante, den Charakter des Menüeintrags beschreibende Zustandsänderung und -kennzeichnung im Drop-Down Menü aufweist.

Damit lassen sich vorteilhaft Check-Box und Radio-Button Einträge von anderen Menüeinträgen im Drop-Down Menü unterscheiden. Der Anwender hat nach Öffnen des relevanten Drop-Down Menüs umgehend einen Überblick und kann sich so wesentlich schneller im Menü orientieren. Ferner kann mit dem Erkennen der Art des Eintrags eine erste Wertung der Einträge durchgeführt werden. Die oft verbreitete Praxis des Ausprobierens, welche insbesondere unter den im Umgang mit der Software weniger geübten Anwendern verbreitet ist, kann weitestgehend entfallen.

In einer bevorzugten Ausführungsform werden als Anzeigemittel zur signifikanten Zustandsänderung und -kennzeichnung von Check-Box und Radio-Button Einträgen unterschiedliche Symbole herangezogen. Diese sollten sich links von dem, den Menüeintrag kennzeichnenden Textstring, befinden. Damit wird die für einige andere Menüeinträge verbreitete visuelle Unterstützung durch Symbolik aufgegriffen und fortgeführt.

In einer weiteren Ausführungsvariante ist das Anzeigemittel, welches die Check-Box Einträge im Drop-Down Menü kennzeichnet, ein Ankreuzfeld. Aufgrund der Bekanntheit dieser Symbolik aus anderen fensterorientierten Auswahlmitteln ist der Erkennungsgrad hoch, Fehlinterpretationen sind auf diese Weise ausgeschlossen. Der inaktive Zustand des Menüeintrages wird durch einen vorzugsweise quadratischen Rahmen dargestellt, der aktive Zustand wird durch einen Haken im Rahmen gekennzeichnet.

In einer weiteren Variante hat das Anzeigemittel, welches die signifikante Zustandsänderung und -kennzeichnung, von sich gegenseitig ausschließenden und damit lediglich umschaltbaren Menüeinträgen, darstellt, die Form eines Anwahlkreises. Der inaktive Zustand des Menüeintrages wird durch einen unausgefüllten Kreis größeren Durchmessers, der aktive Zustand durch einen zusätzlichen, ausgefüllten Kreis kleineren Durchmessers gekennzeichnet, der zentriert im Kreis mit dem größeren Möglichkeit einer Mehrfachauswahl in einem Drop-Down Menü bietet mit dem Erfordernis nach effizienten Arbeiten. In dieser vorgeschlagenen Variante kann nämlich ein zusätzlicher Mouseklick zum Schließen des Drop-Down Menüs entfallen.

In einer weiteren vorteilhaften Variante werden die Verzögerungsmittel nicht aktiviert, solange sich das Auswahlmittel innerhalb der Oberfläche befindet, die durch das Drop-Down Menü aufgespannt wird. Sollte sie aktiviert worden sein, indem sich das Auswahlmittel außerhalb des Oberflächenbereiches des Drop-Down Menü befindet, so können sie vor ihrem Ablauf wieder rückgesetzt werden, indem der Anwender das Auswahlmittel wieder innerhalb der Oberfläche des Drop-Down Menüs positioniert. Sie wird mit dem Verlassen dieses Oberflächenbereiches erneut aktiviert. Hiermit ergibt sich sehr vorteilhaft eine Möglichkeit, die in Check-Box- oder Radio-Button-Listen gemachten Einträge zu bewerten und zu kontrollieren und die Anzahl von Aktionen mit den Auswahlmitteln zu minimieren.

In einer weiteren Ausführungsform sind die Verzögerungsmittel parametrierbar. In diesem Fall können sie auf die wechselnden Bedürfnisse des Anwenders zugeschnitten werden. Der Wertebereich für die Parametrierungsmöglichkeiten sollte Vorteilhafterweise mit dem Wert Null beginnen.

Die Aufgabe wird ferner gelöst durch ein Verfahren zur Einstellung und Anzeige von Information, Daten und/oder Eingabeelementen über Drop-Down Menüs grafischer Bedienoberflächen, wobei das Drop-Down Menü eine Menge von Menüeinträgen beliebiger Art aufweist, wobei die Menge von Menüeinträgen wenigstens eine Anzahl von in beliebiger Kombination an- und abwählbaren Menüeinträgen so genannte Check-Box Listen und/oder sich gegenseitig ausschließenden und damit lediglich umschaltbaren Menüeinträgen so genannte Radio-Button-Listen umfasst und dadurch gekennzeichnet ist, dass das Drop-Down Menü nach An- oder Abwahl eines in beliebiger Kombination an- und abwählbaren Menüeintrags oder eines sich gegenseitig aus-Durchmesser liegt. Aufgrund der Bekanntheit dieser Symbolik aus anderen fensterorientierten Auswahlmitteln ist der Erkennungsgrad hoch, Fehlinterpretationen sind auf diese Weise ausgeschlossen.

Besonders vorteilhaft ist eine Ausführungsform, die dadurch gekennzeichnet ist, dass die Mittel zur Interaktion derart ausgeprägt sind, dass die Zustandsänderung und -kennzeichnung unmittelbar nach An- oder Abwahl durch den Anwender im Drop-Down Menü wirksam wird. Dies ermöglicht dem Benutzer die sofortige Überprüfung des Erfolges der Interaktionen mit dem Computer. Wird die Zustandsänderung angezeigt, ist sie vom Computer verarbeitet worden.

Eine weitere besonders bevorzugte Ausführungsform ist dadurch gekennzeichnet, dass die Mittel zur Interaktion das Drop-Down Menü nach An- oder Abwahl eines in beliebiger Kombination an-und abwählbaren Menüeintrags oder eines sich gegenseitig ausschließenden und damit lediglich umschaltbaren Menüeintrags nicht selbsttätig schließen.

Hierbei ist vor allem vorteilhaft, dass dem Benutzer die Ergebnisse der Interaktion mit dem Computer angezeigt werden. Er hat Zeit etwaige Fehleingaben sofort zu korrigieren. Die Überprüfung der Eingaben durch nochmaliges zeitaufwändige Öffnen des Drop-Down Menüs und seiner eventuell vorhandenen Drop-Down Untermenüs entfällt. Der Vorteil offenbart sich insbesondere dann, wenn wie bei Check-Box-Einträgen oft notwendig, mehrere Auswahloptionen gleichzeitig angewählt werden sollen. Herkömmlich ist für jede einzelne Auswahloption das Durchnavigieren durch das Drop-Down Menü und etwaigen Drop-Down Untermenüs notwendig, dies entfällt hierbei gänzlich.

Besonders vorteilhaft ist eine Ausführungsform, die dadurch gekennzeichnet ist, dass Verzögerungsmittel das Drop-Down Menü selbsttätig schließen. Diese Ausführungsform verbindet die Vorteile, die eine Überprüfung von Menüeinträgen oder die schließenden und damit lediglich umschaltbaren Menüeinträgen nicht selbsttätig schließt.
Hinsichtlich der Vorteile, der hierauf basierenden weiteren Ausführungsformen und deren Vorteile wird auf die vorgenannten Ausführungen verwiesen.

Nachfolgend werden Ausführungsbeispiele der Erfindung anhand von Zeichnungen näher erläutert. Darin zeigen:
- FIG 1: beispielhaft eine Oberfläche mit Checked-Menu-Items im Stand der Technik
- FIG 2: beispielhaft eine Oberfläche mit Checked-Menu-Items

Einander entsprechende Teile sind in allen Figuren mit den selben Bezugszeichen versehen.

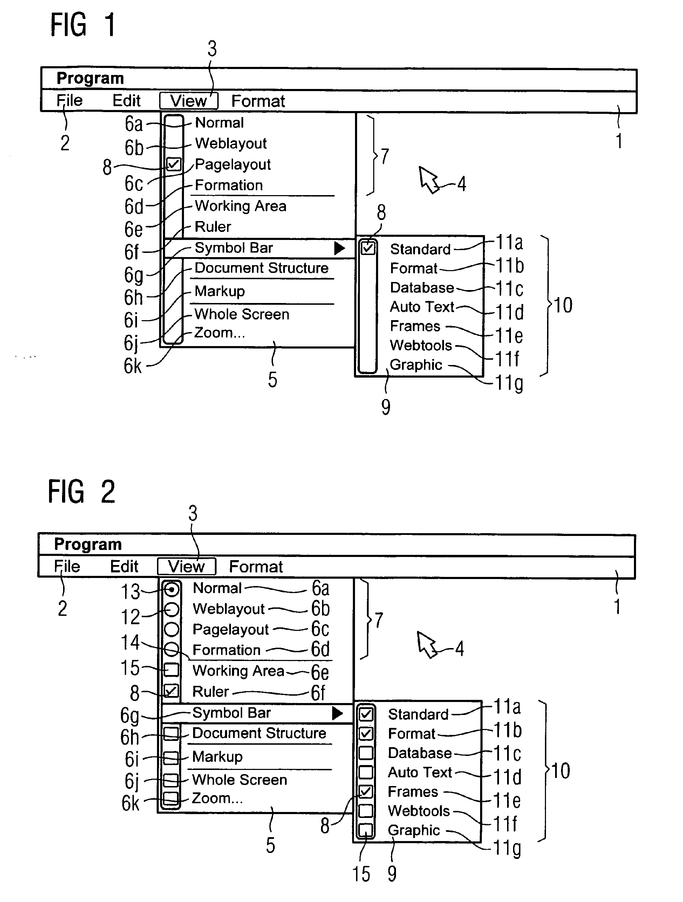

Fig 1 zeigt eine Menüleiste 1 mit den Menüpunkten 2, die durch die Textstrings "File", "Edit", "View" und "Format" bezeichnet sind. Die jeweiligen Textstrings werden von einem sensitiven Feld 3 umfasst, welches durch Anfahren mit dem Auswahlmittel 4 vorgewählt und in einer weiteren Aktion mit dem Auswahlmittel 4 aktiviert werden kann. Die Aktivierung wird durch einen Mouseklick ausgelöst. Vorwahl und Aktivierung ist gleichermaßen über Tastatureingaben möglich, wobei die Anwahl i.d.R. durch eine erste Tastenkombination, die Aktivierung durch eine weitere Tastatureingabe ausgelöst wird. Mit Aktivierung wird unterhalb des Menüpunktes 3 ein Drop-Down Menü 5 aufgeblendet. Das Drop-Down Menü 5 besteht aus einer Anzahl von Menüeinträgen 6a bis 6k, die i.d.R. in Zusammenhang zur im Menüpunkt 3 genannten Begrifflichkeit stehen. Dabei stellen die Menüeinträge 6a bis 6d Checked Menü Items einer Radio-Button-Liste 7 mit sich gegenseitig ausschließenden und damit lediglich umschaltbaren Menüeinträgen dar, was dem Anwender zunächst nicht offenbart wird. Die Menüeinträge der Radio-Button-Liste 7 sind nicht durch zusätzliche eigene Symbolik gekennzeichnet. Die Aktivierung eines Menüeintrages 6a bis 6d führt zur Deaktivierung des zuvor aktiven Menüeintrages 6a bis 6d und zur sofortigen Schließung des Drop-Down Menüs 5. In Fig 1 ist der Eintrag 6a aktiviert. Die Aktivierung des Eintrags 6a ist über einen Icon, in Fig 1 über ein Ankreuzfeld 8, angezeigt.

Die Menüeinträge 6e, 6f und 6h bis 6j stellen ebenfalls, dem Anwender nicht offenbarte Checked Menü Items dar, diesmal jedoch vom Typ Check-Box. Sie sind in beliebiger Kombination an- oder abwählbar. Die Menüeinträge 6e, 6f und 6h bis 6j sind nicht durch zusätzliche eigene Symbolik gekennzeichnet. Menüeintrag 6f befindet sich im aktivierten Zustand, was über das Ankreuzfeld 8 dargestellt wird. Die Aktivierung eines der Menüeinträge 6e, 6f und 6h bis 6j führt zum ausgewählten Modi und zum sofortigen Schließen des Drop-Down Menüs 5.

Der Menüeintrag 6k öffnet nach Aktivierung ein weiteres Eingabefenster und schließt ebenfalls das Drop-Down Menü 5. Menüeintrag 6g öffnet nach Anfahren mit dem Auswahlmittel 4 das Drop-Down Menü 9 der zweiten Ebene. Die Menüeinträge 11a bis 11g im Drop-Down Menü 9 stellen Checked Menü Items einer zusammenhängenden Check-Box Liste 10 dar. Der Anwender hat nach Öffnen des Drop-Down Menüs 9 weder die Information darüber, dass es sich um Checked Menü Items noch dass es sich um eine Check-Box Liste handelt. Die Menüeinträge 11a bis 11g sind nicht durch zusätzliche eigene Symbolik gekennzeichnet. Im Drop-Down Menü 9 ist der Eintrag 11a aktiv. Die Auswahl eines weiteren Menüeintrags aus dem Drop-Down Menü 9 führt zum sofortigen Schließen der Drop-Down Menüs 5 und 9.

Fig 2 zeigt die Menüleiste 1 mit den zur Fig 1 identischen Menüpunkten 2, welche wiederum von einem sensitivem Feld 3 umfasst sind und durch Anfahren mit dem Auswahlmittel 4 vorgewählt und in einer weiteren Aktion mit dem Auswahlmittel 4 aktiviert werden können. Mit Aktivierung wird unterhalb des Menüpunktes 3 ein Drop-Down Menü 5 aufgeblendet. Das Drop-Down Menü 5 besteht aus der gleichen Anzahl von Menüeinträgen 6a bis 6k. Die Menüeinträge 6a bis 6d bilden wiederum die Radio-Button-Liste 7. Im Unterschied zur Fig 1 sind die Menüeinträge 6a bis 6d nunmehr durch vorangestellte Anwahlkreise 12, 13 dargestellt, wobei der Auswahlkreis 12 einen nicht aktivierten Menüeintrag und der Auswahlkreis 13 einen aktivierten Menüeintrag kennzeichnet. In Fig 2 ist der Menüeintrag 6a aktiv. Würde nunmehr mittels Auswahlmittel 4 der Menüeintrag 6c angewählt, so würde sich der Auswahlkreis 12 durch den Auswahlkreis 13 ersetzt. Gleichzeitig würde der Auswahlkreis 13 vor dem Menüeintrag 6a in den Auswahlkreis 12 wechseln. In Kombination mit den vorbeschriebenen Ausführungsformen würde sich das Drop-Down Menü 5 erst nach Quittierung mit dem Auswahlmittel 4 oder nach Ablauf einer Verzögerungszeit schließen, was dem Anwender die Möglichkeit gäbe die Interaktion mit dem Computer zu überprüfen.

Durch den Trennstrich 14 wird die Radio-Button-Liste 7 abgeschlossen, möglicherweise folgende Radio-Button werden nicht mehr von der Radio-Button-Liste 7 umfasst. Auf diese Weise erhält der Anwender nach Öffnen des Drop-Down Menüs 5 sofort die Information, das es sich bei den Menüeinträgen 6a bis 6d um Einträge einer Radio-Button-Liste handelt und welcher Eintrag gerade aktiv ist.

Die Menüeinträge 6e, 6f und 6h bis 6j erhalten im inaktiven Zustand ein dem Texteintrag vorangestelltes Ankreuzfeld 15 und sind somit eindeutig als Checked Menü Item vom Typ Check-Box gekennzeichnet. In Fig. 2 ist Menüeintrag 6f aktiv geschaltet. Würde der Anwender mit dem Auswahlmittel 4 nunmehr beispielsweise den Menüeintrag 6i anwählen, so würde das Ankreuzfeld 15 durch das Ankreuzfeld 8 ersetzt. Das Ankreuzfeld 8 vor dem Menüeintrag 6f bleibt von dieser Interaktion unberührt. Bei gleichzeitiger Realisierung einer der Ausführungsformen bei denen das Drop-Down Menü nicht unmittelbar schließt, wäre eine Prüfung dieser Bedienung durch den Anwender leicht möglich. Das Gleiche gilt für die Menüeinträge 11a bis 11g der Check-Box Liste 10 im Drop-Down Menü 9, welches durch Anwahl des Menüeintrags 6g geöffnet wird. Auch hier werden die Menüeinträge 11a bis 11g im inaktiven Zustand durch eine Ankreuzfeld 15 und im aktiven Zustand durch ein Ankreuzfeld 8 dargestellt.

## Patentansprüche

1. Vorrichtung zur Einstellung und Anzeige von Information, Daten und/oder Eingabeelementen auf einer grafischen Bedienoberfläche, insbesondere auf einem Bildschirm,
- mit mindestens einer Menüleiste (1) bestehend aus einer Anzahl von Menüpunkten (2), wobei
- mindestens ein Drop-Down Menü (5, 9) zu einem Menüpunkt (2) zugeordnet ist,
- mit einer Menge von Menüeinträgen (6a-6k, 11a-11g) im DropDown Menü (5, 9), wobei
- die Menüeinträge in mindestens einem Drop-Down Menü (5, 9) derart ausgebildet sind, dass a) wenigstens eine Anzahl dieser Menüeinträge in beliebiger Kombination an- und abwählbare Menüeinträge (6e, 6f, 6h-6j, 11a-11g) sind und/oder dass b) wenigstens eine Anzahl dieser Menüeinträge mindestens sich gegenseitig ausschließende und damit lediglich umschaltbare Menüeinträge (6a-6d) sind
**dadurch gekennzeichnet, dass**
die Vorrichtung Mittel zur Interaktion aufweist, durch die der Menüeintrag gemäß a) und b) seine eigene, signifikante, den Charakter des Menüeintrags beschreibende Zustandsänderung und -kennzeichnung im Drop-Down Menü (5, 9) erhält.

2. Vorrichtung nach Anspruch 1, **dadurch gekennzeichnet, dass** die Mittel zur Interaktion Anzeigemittel umfassen, die die eigene, signifikante Zustandsänderung und
-kennzeichnung in Form von Symbolen darstellt.

3. Vorrichtung nach Anspruch 2, **dadurch gekennzeichnet, dass** die Anzeigemittel der signifikanten Zustandsänderung und -kennzeichnung des in beliebiger Kombination an- und abwählbaren Menüeintrags die Form eines Ankreuzfeld (8, 15) aufweisen.

4. Vorrichtung nach Anspruch 2, **dadurch gekennzeichnet, dass** die Anzeigemittel der signifikanten Zustandsänderung und -kennzeichnung der sich gegenseitig ausschließenden und damit lediglich umschaltbaren Menüeinträge die Form eines Anwahlkreis (12, 13) aufweisen.

5. Vorrichtung nach einem der vorhergehenden Ansprüche, **dadurch gekennzeichnet, dass** die Mittel zur Interaktion derart ausgestaltet sind, dass die Zustandsänderung und -kennzeichnung unmittelbar nach An- oder Abwahl im Drop-Down Menü (5, 9) wirksam ist.

6. Vorrichtung nach einem der vorhergehenden Ansprüche, **dadurch gekennzeichnet, dass** die Mittel zur Interaktion derart ausgestaltet sind, dass das Drop-Down Menü (5, 9) nach An- oder Abwahl eines in beliebiger Kombination an- und abwählbaren Menüeintrags (6e, 6f, 6h-6j, 11a-11g) oder eines sich gegenseitig ausschließenden und damit lediglich umschaltbaren Menüeintrags (6a-6d) nicht schließt.

7. Vorrichtung nach Anspruch 6, **dadurch gekennzeichnet, dass** die Mittel zur Interaktion derart ausgeprägt sind, dass das Drop-Down Menü (5, 9) nach Quittierung des Anwenders schließt.

8. Vorrichtung nach Anspruch 6, **dadurch gekennnzeichnet, dass** die Mittel zur Interaktion Verzögerungsmittel aufweisen, die das Drop-Down Menü (5, 9) selbsttätig schließen.

9. Vorrichtung nach Anspruch 8, **dadurch gekennzeichnet, dass** die Verzögerungsmittel nicht aktiviert und wieder rückgesetzt werden, wenn das Auswahlmittel (4) innerhalb der durch das Drop-Down Menü (5, 9) aufgespannten Oberfläche positioniert ist.

10. Vorrichtung nach einem der Ansprüche 8 oder 9, **dadurch gekennzeichnet, dass** die Verzögerungsmittel parametrierbar sind.

11. Verfahren zur Einstellung und Anzeige von Information, Daten und/oder Eingabeelementen über Drop-Down Menüs (5, 9) grafischer Bedienoberflächen, wobei das Drop-Down Menü (5, 9) eine Menge von Menüeinträgen (6a-6k, 11a-11g) beliebiger Art aufweist, wobei die Menge von Menüeinträgen wenigstens eine Anzahl von
a) in beliebiger Kombination an- und abwählbaren Menüeinträgen (6e, 6f, 6h-6j, 11a-11g)
und/oder
b) sich gegenseitig ausschließenden und damit lediglich umschaltbaren Menüeinträgen (6a-6d)
umfasst, **dadurch gekennzeichnet, dass** der Menüeintrag gemäß a) und b) jeweils seine eigene, signifikante, den Charakter des Menüeintrags beschreibende Zustandsänderung und -kennzeichnung im Drop-Down Menü (5, 9) aufweist.

12. Verfahren nach Anspruch 11, **dadurch gekennzeichnet, dass** die eigene, signifikante Zustandsänderung und -kennzeichnung durch Symbole dargestellt wird.

13. Verfahren nach Anspruch 12, **dadurch gekennzeichnet, dass** die signifikante Zustandsänderung und -kennzeichnung des in beliebiger Kombination an- und abwählbaren Menüeintrags durch ein Ankreuzfeld (8, 15) dargestellt wird.

14. Verfahren nach Anspruch 12, **dadurch gekennzeichnet, dass** die signifikante Zustandsänderung und -kennzeichnung eines sich gegenseitig ausschließenden und damit lediglich umschaltbaren Menüeinträgen durch einen Anwahlkreis (12, 13) dargestellt wird.

15. Verfahren nach einem der Ansprüche 11-14, **dadurch gekennzeichnet, dass** die Zustandsänderung und - kennzeichnung unmittelbar nach An- oder Abwahl im Drop-Down Menü (5, 9) wirksam wird.

16. Verfahren nach einem der Ansprüche 11-15, **dadurch gekennzeichnet, dass** das Drop-Down Menü (5, 9) nach An- oder Abwahl eines in beliebiger Kombination an- und abwählbaren Menüeintrags (6e, 6f, 6h-6j, 11a-11g)
oder eines sich gegenseitig ausschließenden und damit lediglich umschaltbaren Menüeintrags (6a-6d) nicht schließt.

17. Verfahren nach Anspruch 16, **dadurch gekennzeichnet, dass** das Drop-Down Menü (5, 9) nach Quittierung des Anwenders schließt.

18. Verfahren nach Anspruch 16, **dadurch gekennzeichnet, dass** das Drop-Down Menü (5, 9) nach Ablauf einer Verzögerungszeit selbsttätig schließt.

19. Verfahren nach Anspruch 18, **dadurch gekennzeichnet, dass** die Verzögerungszeit nicht startet und wieder rückgesetzt wird, wenn das Auswahlmittel (4) innerhalb der durch das Drop-Down Menü (5, 9) aufgespannten Oberfläche positioniert ist.

20. Verfahren nach einem der Ansprüche 18 oder 19, **dadurch gekennzeichnet, dass** die Verzögerungszeit parametrierbar ist.

21. Verfahren zur Einstellung und Anzeige von Information, Daten und/oder Eingabeelementen über Drop-Down Menüs (5, 9) grafischer Bedienoberflächen, wobei das Drop-Down Menü (5, 9) eine Menge von Menüeinträgen (6a-6k, 11a-11g) beliebiger Art aufweist, wobei die Menge von Menüeinträgen wenigstens eine Anzahl von
a) in beliebiger Kombination an- und abwählbaren Menüeinträgen (6e, 6f, 6h-6j, 11a-11g)
und/oder
b) sich gegenseitig ausschließenden und damit lediglich umschaltbaren Menüeinträgen (6a-6d) umfasst, **dadurch gekennzeichnet, dass** das Drop-Down Menü (5, 9) nach An- oder Abwahl eines Menüeintrages gemäß a) oder b) nicht schließt.

22. Verfahren nach Anspruch 21, **dadurch gekennzeichnet, dass** das Drop-Down Menü (5, 9) nach Quittierung des Anwenders schließt.

23. Verfahren nach Anspruch 22, **dadurch gekennnzeichnet, dass** das Drop-Down Menü (5, 9) nach Ablauf einer Verzögerungszeit selbsttätig schließt.

24. Verfahren nach Anspruch 23, **dadurch gekennzeichnet, dass** die Verzögerungszeit nicht startet und wieder rückgesetzt wird, wenn das Auswahlmittel (4) innerhalb der durch das Drop-Down Menü (5, 9) aufgespannten Oberfläche positioniert ist.

25. Verfahren nach einem der Ansprüche 23 oder 24, **dadurch gekennzeichnet, dass** die Verzögerungszeit parametrierbar ist.
